(19) **Europäisches Patentamt**

**European Patent Office**

**Office européen des brevets**

(11) **EP 1 032 170 B1**

(12) **EUROPEAN PATENT SPECIFICATION**

(45) Date of publication and mention
of the grant of the patent:
**12.01.2005   Bulletin 2005/02**

(51) Int Cl.⁷: **H04L 25/03**, H04B 7/005

(21) Application number: **00301393.5**

(22) Date of filing: **22.02.2000**

(54) **Process and apparatus for receiving signals transmitted over a distorted channel**

Verfahren und Vorrichtung zum Empfangen von über einen gestörten Kanal übertragenen Signalen

Procédé et appareil pour réception des signaux transmis sur un canal perturbé

(84) Designated Contracting States:
**AT BE CH CY DE DK ES FI FR GB GR IE IT LI LU MC NL PT SE**

(30) Priority: **23.02.1999   EP 99301299**

(43) Date of publication of application:
**30.08.2000   Bulletin 2000/35**

(73) Proprietor: **LUCENT TECHNOLOGIES INC.**
**Murray Hill, New Jersey 07974-0636 (US)**

(72) Inventors:
 • **Gerstacker, Wolfgang Helmut**
  **Nurnberg (DE)**
 • **Obernosterer, Frank Gerhard Ernst**
  **Weissenohe (DE)**

(74) Representative: **Williams, David John et al**
 **Lucent Technologies Inc.,**
 **Intellectual Property Division,**
 **5 Mornington Road**
 **Woodford Green, Essex IG8 0TU (GB)**

(56) References cited:
 **EP-A- 0 729 254**       **GB-A- 2 137 459**

 • **QURESHI S U H ET AL: "REDUCED-STATE SEQUENCE ESTIMATION WITH SET PARTITIONING AND DECISION FEEDBACK" IEEE TRANSACTIONS ON COMMUNICATIONS, vol. 36, no. 1, January 1988 (1988-01), pages 13-20, XP000758632 ISSN: 0090-6778**

**Description**

The invention relates to a digital receiver for receiving signals transmitted over a distorted channel, according to the preamble of claim 1; a prefilter for use in such a digital receiver; and also a process for receiving signals transmitted over a distorted channel.

In digital transmission over dispersive channels, the transmitted signal is distorted and undergoes interference by noise. In mobile radio systems, such distortions arise due to multipath propagation and to intrinsic pulse interferences of the modulation process. Receivers with correspondingly implemented distortion correctors must therefore be used, which can recover the transmitted data from the distorted received signal.

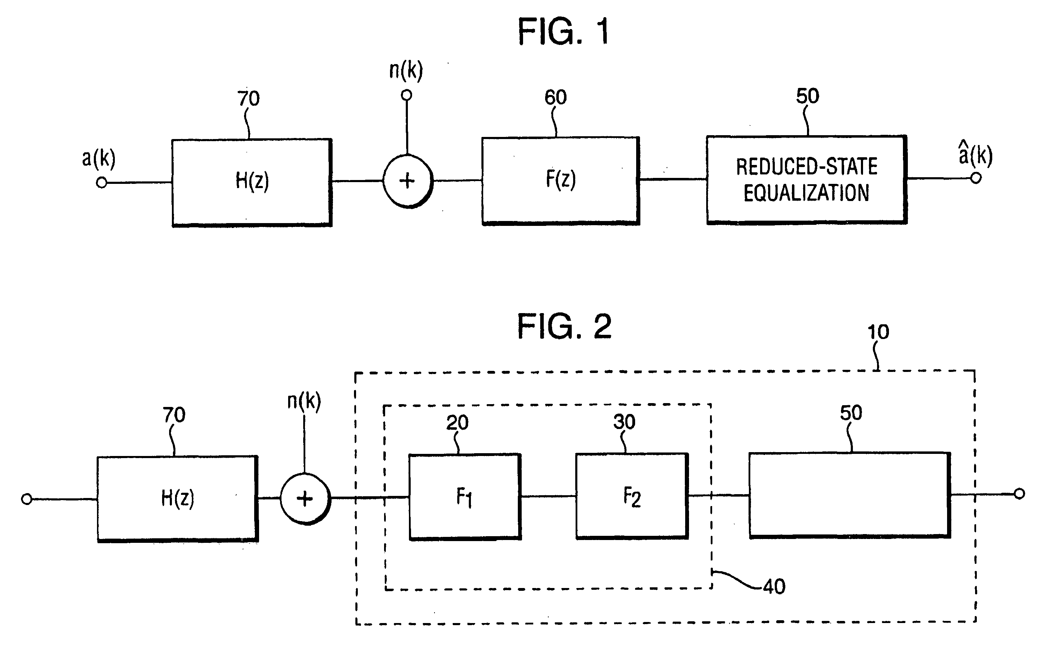

Fig. 1 shows the principal block circuit diagram of a digital transmission path with a distorting channel 70 which can produce intersymbol interference, as is known <u>per se</u>. It is assumed here that pulse amplitude modulated (PAM) data is transmitted over the channel 70. Herein a(k) denotes the time-discrete data symbols to be transmitted, H(z) the impulse response of the channel 70, n(k) a time-discrete interference, F(z) the impulse response of a known prefilter 40 which is connected before a likewise known state-reduced distortion corrector 50, and â(k) denotes the time-discrete data symbols which are determined. The scanned time-discrete received signal r(k) then results as a convolution, affected by noise, of the time-discrete PAM data sequence a(k) with the time-discrete channel impulse response h(k), the length of which is denoted by L. The equation for the scanned received signal r(k) is given by

$$r(k) = \sum_{\kappa=0}^{L-1} h(\kappa) * a(k - \kappa) + n(k) \tag{1}$$

Without any limitation of generality, the time-discrete distortion can then be assumed to be white. In dependence on the modulation process used, the amplitude coefficients a(k) and the channel impulse response h(k) are either purely real or complex. An optimum distortion correction of the time-discrete received signal is possible by the use of the Maximum Likelihood Estimation (MSLE) of data sequences, which is known <u>per se</u>, and which is described in the article, "Maximum-Likelihood Sequence Estimation of Digital Sequences in the Presence of Intersymbol Interference" by G.D. Forney, Jr., in IEEE Transactions on Information Theory, IT-18:363-378, 1972. In this article, G.D. Forney showed, among other things, that the maximum likelihood estimation of data sequences can be efficiently implemented by means of the Viterbi algorithm. However, when the channel impulse response h(k) is accordingly long, the Viterbi algorithm can hardly be effected, since the trellis diagram which has to be processed with the Viterbi algorithm has $M^{L-1}$ states per time step with M-step amplitude coefficients. The complexity of the Viterbi algorithm therefore increases exponentially with the length L of the time-discrete impulse response of the channel. Therefore when the number of the distorted symbols following a transmitted signal is too large, reduced-state processes have to be used for distortion correction because of the limited available computing power. The simplest possibility for this is to carry out distortion correction of the received signal with decision-feedback equalization (DFE). An improvement of this principle was described by A. Duel-Hallen and C. Heegard in the article, "Delayed Decision Feedback Sequence Estimation" which appeared in IEEE Trans. on Commun., COM-37:428-436, 1989. This distortion correction process is known as Decision-Feedback-Sequence Estimation (DFSE). A similar further development of the DFE process, which offers great advantages for non-binary signal alphabets in particular, was described by M.V. Eyuboglu and S.U. Qureshi in the article, "Reduced-state signal estimation with set partitioning and decision feedback", which appeared in IEEE Trans. on Commun., COM-36:13-20, January 1988. This process is known as Reduced-State Sequence Estimation (RSSE).

These suboptimal distortion correction processes referred to hereinabove provide exclusively hard estimation values for the data, without containing any further information concerning the reliability of the individual decisions, that is, what probability they have of being correct. Such "soft output information" is however required in many transmission systems because of an additionally present channel coding for increasing the resistance to interference, since thereby the results of the decoding can be substantially improved after the distortion correction. An algorithm for the determination of symbol probability was proposed by L.R. Bahl, J. Cocke, F. Jelinek and J. Raviv in the article, "Optimal decoding of linear codes for minimizing symbol error rates" which appeared in IEEE Transactions on Information Theory, IT-20:284-287, 1974. Since this algorithm likewise works off a trellis diagram, it can be state-reduced in the same manner as the Viterbi algorithm.

The performance efficiency of such reduced-state algorithms carried out by the distortion corrector 50 can be further improved by means of a preceding all-pass filter which transforms the channel impulse response into its minimal-phase equivalent. The desired all-pass filter with the transfer function A(z) then results from the condition

$$H(z) * A(z) = H_{min}(z), \tag{2}$$

where H(z) denotes the (z-transformed) channel transfer function corresponding to h(k), and $H_{min}(z)$ represents the corresponding minimum-phase transfer function. Thus the desired all-pass transfer function is as a result

$$A(z) = \frac{H_{min}(z)}{H(z)} \tag{3}$$

A possible process for the calculation of the all-pass transfer function first determines the minimal-phase transfer function $H_{min}(z)$ for a given channel transfer function H(z). This can take place, for example, by means of a process working with the so-called cepstrum, as is known, for example, from the technical book "Time-discrete Signal Processing" by A.V. Oppenheim and R.W. Shafer, Oldenburg-Verlag, München Wien 1992. After use of the channel transfer function and the minimal-phase transfer function $H_{min}(z)$ in Equation (3), the transfer function A(z) of the all-pass filter is known. Since however the implementation of this transfer function would show unstable behavior due to a recursive structure, the acausal and then stable impulse response corresponding to A(z) is to be determined, and also to be realized by approximation using a FIR (Finite Impulse Response) filter. The computational cost of the described methods is of course large. Apart from this, in the approximation of the ideal all-pass transfer function by such a FIR filter, its degree has to be set very high, in order to avoid a degradation of the subsequent reduced-state distortion correction.

According to an alternative method, the all-pass transfer function is approximated by the FIR forward filter of a MMSE-DFE (Minimum Mean-Squared Error Decision-Feedback Equalization). This method has been described, for example, in the article, "Improved Equalization for GSM Mobile Communications", which appeared in Proceedings of ICT '96, Istanbul, April 1996, by W. Gerstacker and J. Huber, and in the article "Time Truncation of Channel Impulse Responses by Linear Filtering: A method to reduce the complexity of Viterbi Equalization", which appeared in International Journal of Electronics and Communications (AEU), 48(5):237-243, 1994, by K.D. Kammeyer. In these methods, a matrix which depends on the channel impulse response has first to be calculated and then inverted, which likewise entails a very high calculation cost.

All of the heretofore known processes, which approximate the ideal all-pass transfer function by means of a FIR filter 60, as, for example, disclosed in GB-A-2 137 459 suffer from their very high calculation cost in the design of such FIR filters.

The invention therefore has as its object to make available a digital receiver, a prefilter and a receiving process, with which nearly the same performance efficiency can be attained as regards a reduced-state distortion correction as by the use of the ideal all-pass filter. In particular, the computational cost for the approximation of the ideal all-pass transfer function is thereby to be markedly reduced.

The invention solves this technical problem with the features of claim 1.

The basic concept of the invention is contained in designing, for a digital receiver, a prefilter which can be calculated with markedly smaller cost, and which can very accurately approximate the ideal all-pass transfer function, in order to make possible a substantially optimum reduced-state distortion correction of distorted received signals.

For this purpose, the digital receiver has a two-stage prefilter for conversion of the impulse response of the channel into a minimal-phase or maximal-phase impulse response, and a distortion corrector. The prefilter consequently includes a first FIR (Finite Impulse Response) filter stage with a first transfer function and, connected in cascade thereto, a second FIR filter stage with a second transfer function, wherein the overall transfer function formed by the first and second transfer functions represents an approximation of the ideal all-pass transfer function for the prefilter.

The first FIR filter state can be implemented by a Matched Filter, which is known per se, and whose transfer function is a non-recursive transfer function which can be derived from the previously determined channel impulse response. It has been found that the ideal all-pass transfer function can be approximated nearly optimally by a two-stage prefilter when a predictive error filter is implemented as the second FIR filter stage, and has a transfer function which is a predetermined conjugate complex non-recursive transfer function of the form 1-P*(1/z*), where the expression P(z) is the predictor of the predictive error filter 1-P(z).

The computational cost for the design of the prefilter is small when the coefficients of the predictive error filter are determined by the solution of the Yule-Walker equations, the coefficient matrix of which is a Toeplitz matrix.

Since the frequency response of the transfer function of the predictive error filter can have a rough or undulating course, it can be advantageous to multiply the coefficients for the predictive error filter by a suitable window sequence, for example by a Bartlett window. Such a Bartlett window is for example known from the technical literature "Digital Signal Processing 1" which appeared in Springer-Verlag, Berlin, Heidelberg, New York, 1994, 4th. Edition, by H.W. Schußler.

The computational cost for the design of the prefilter can be further reduced in that the Levinson algorithm can be used for solving the Yule-Walker equations.

The numerical complexity of the design of the two-stage prefilter can be furthermore reduced when the Levinson-Durbin algorithm is used for solving the Yule-Walker equations.

Because of the two-stage construction of the prefilter, a substantially optimum approximation of the ideal all-pass transfer function can be attained, so that the distortion corrector which follows the prefilter can carry out a reduced-state, trellis-based channel distortion correction, the results of which come very close to those when using an ideal all-pass filter.

The technical problem is furthermore solved by the features of claim 8 concerning a two-stage prefilter for use in a digital receiver and, on the other hand, by the process steps of claim 14 concerning a process for receiving signals transmitted over a distorting channel.

According to the process, the channel pulse response is first determined, for example by the evaluation of training sequences. The coefficients of a first FIR filter stage are then determined from the channel pulse response. Thereafter, the coefficients of a second, predetermined FIR filter stage of the prefilter are calculated such that the overall transfer function constituted by the first and second FIR filter stages represents an approximation of the ideal all-pass transfer function for the prefilter, so that the channel pulse response can be converted into a corresponding minimal-phase or maximal-phase system.

Advantageous developments are given in the dependent claims.

The invention will be described in more detail hereinbelow by means of an embodiment example in conjunction with the accompanying drawings.

Fig. 1     shows a block diagram of the principle of a time-discrete transmission path with a known prefilter.

Fig. 2     shows a block diagram of the principle of a discrete transmission path with a two-stage prefilter according to the invention.

In digital transmission over a distorting channel, distorted received signals can only be recovered with a high performance efficiency by means of a reduced-state distortion correction process, when the distorting pulse response of the transmission channel is minimal-phase. In a channel which is not minimal-phase, a suitable prefilter is therefore to be designed which can deliver in an approximate manner a minimal-phase overall pulse response of the cascade consisting of the channel and the prefilter.

A block circuit diagram of a digital transmission system for this purpose is shown in Fig. 2, and corresponds to the transmission system shown in Fig. 1 with the exception of the prefilter 40. The prefilter 40 shown in Fig. 2 is constructed as a two-stage filter which includes a first FIR filter 20 and a second, subsequent FIR filter 30. The two-stage filter 40 is connected before a reduced-state distortion corrector 50 which is known per se and which has the reconstructed transmitted signals present at its output. The two-stage prefilter 40 is distinguished in that it can be designed with the smallest possible computational cost and furthermore can deliver a nearly optimum approximation of the ideal all-pass transfer function given by Equation (3).

The setup of the design of the prefilter 40 will be described hereinbelow.

The starting point of the following considerations is the all-pass transfer function A(z) given in Equation (3), wherein H(z) is again the transfer function of the transmission channel 70 and $H_{min}$ represents the corresponding minimal-phase transfer function. Furthermore the starting point is the identity

$$\left|H(e^{j2\pi fT})\right|^2 = \left|H_{min}(e^{j2\pi fT})^2\right| \tag{4}$$

which is equivalent to the equation

$$H(z) \; \ast \; H^{\cdot}\left(\frac{1}{z^{\cdot}}\right) = \; H_{min}(z) \; \ast \; H^{\cdot}_{min}\left(\frac{1}{z^{\cdot}}\right) \tag{5}$$

Here H(z) is again the transfer function of the channel 70 obtained by z-transformation, H*1/z*) is the conjugate complex form of the transfer function H(z), $H_{min}(z)$ is again the minimal-phase transfer function of the channel 70, and $H^*_{min}$ (1/z*) is its complex conjugate form.

Equation (5) can now be directly transformed into

$$\frac{H_{\min}(z)}{H(z)} = \frac{H^*\left(\dfrac{1}{z^*}\right)}{H^*_{\min}\left(\dfrac{1}{z^*}\right)} \tag{6}$$

On comparison of Equations (3) and (6), it can immediately be seen that the all-pass transfer function is likewise given by

$$A(z) = \frac{H^*\left(\dfrac{1}{z^*}\right)}{H^*_{\min}\left(\dfrac{1}{z^*}\right)} \tag{7}$$

The equation can be rewritten in the form

$$A(z) = A_1(z) * A_2(z) \tag{8}$$

wherein

$$A_1(z) = H^*(\frac{1}{z^*}) = F_1(z) \tag{9}$$

and

$$A_2(z) = \frac{1}{H^*_{\min}} (\frac{1}{z^*}) \tag{10}$$

hold. Here Equation (9) gives the transfer function of the first FIR filter stage 20 and Equation (10) gives the transfer function of the second FIR filter stage 30 of the two-stage prefilter 40. Let it now be assumed that the channel transfer function H(z), where a non-recursive function is concerned, has already been determined, for example by means of a predetermined training sequence. The impulse response to the transfer function $F_1(z)$ of the first FIR filter stage 20 can now be immediately determined by conjugation and reversal of the sequence of coefficients of the known channel pulse response. The expression $F_1(z)$ thus represents the transfer function of a matched filter which is matched to the time-discrete channel pulse response. This means that the first FIR filter stage 20 of the two-stage prefilter 40 is implemented as a matched filter which is matched to the time-discrete channel pulse response. For the complete design of the two-stage prefilter 40, the recursive transfer function $A_2(z)$ given by Equation (10) now still has to be implemented by the second FIR filter stage 30. For the second FIR filter stage 30, the following relation was applied:

$$F_2(z) \approx C \frac{1}{H_{\min}^*(1/z^*)} \tag{11}$$

where the constant C is to be optional but not equal to zero.
Equivalent to Equation (11), a FIR filter transfer function G according to

$$G(z) \approx K \frac{1}{H_{\min}(z)}, \quad K \neq 0 \tag{12}$$

is to be determined. Now the transfer function $F_2(z)$ for the second FIR filter 30 can be given by

$$F_2(z) = G^* \left( \frac{1}{z^*} \right) \tag{13}$$

Although the second FIR filter stage 30 can basically be embodied as any optional FIR filter, the inventors have found that when a conjugated and time-reflected predictive error filter is used, a nearly optimum approximation to the ideal all-pass transfer function is possible. As a consequence, the following equation

$$G(z) = 1 - P(z) \tag{14}$$

is proposed, wherein

$$1 - P(z) = 1 \sum_{k=1}^{q_p} p(k)^* z^{-k} \tag{15}$$

is a predictive error filter of degree $q_p$ for a noise process with a power density spectrum proportional to $|H(e^{j2\pi fT})|^2$. The predictor $P(z)$ is determined such that the output power of the predictive error filter is minimized. In order to obtain optimum coefficients for the predictive error filter, the coefficients are calculated by solving the Yule-Walker equations

$$\Phi_{kh}p = \phi_{kh} \tag{16}$$

with the Toeplitz matrix

$$\Phi_{hh} = \begin{bmatrix} \varphi_{hh}[0] & \varphi_{hh}[-1] & \cdots & \varphi_{hh}[-(q_p-1)] \\ \varphi_{hh}[1] & \varphi_{hh}[0] & \cdots & \varphi_{hh}[-(q_p-2)] \\ \vdots & \vdots & \cdots & \\ \varphi_{hh}[q_p-1] & \varphi_{hh}[(q_p-2)] & \cdots & \varphi_{hh}[0] \end{bmatrix} \tag{17}$$

$$p = (p(1), p(2) \ldots p(q_p))^T \tag{18}$$

$$\varphi_{hh} = [\varphi_{hh}(1), \varphi_{hh}(2) \ldots \varphi_{hh}(q_p)]^T \tag{19}$$

$$\varphi_{hh}(k) = h(k)^* h^*(-k) \tag{20}$$

Care is taken that the transfer function 1-P(z) of the prediction error filter is always minimal-phase (see in this regard, for example, the article "Linear Prediction : A Tutorial Review" which appeared in Proc. IEEE, 63:561-580, April 1975, by J. Makhoul). For the limiting case, in which qp is nearly $\infty$, a white output noise results, i.e.

$$\left|1 - P(e^{j2\pi fT})\right|^2 * \left|H(e^{j2\pi fT})\right|^2 = const. \tag{21}$$

or

$$(1-P(z)) \; * \; \left(1 - P^{\bullet}\left(\frac{1}{z^*}\right)\right) * H(z) \; * \; H^{\bullet}\left(\frac{1}{z^*}\right) = const. \tag{22}$$

There consequently follows:

$$(1-P(z))(1-P^{\bullet}(\frac{1}{z^*})) = \frac{const.}{H_{min}(z) * H^*_{min}\left(\frac{1}{z^*}\right)} \tag{23}$$

in which Equation (5) has been used. From Equation (23), the minimal-phase nature 1-P(z), and $H_{min}$ (z) (and also $1/H_{min}(z)$), there follows immediately that for an infinite filter degree $q_p$ the auxiliary equation

$$G(z) = 1 - P(z) = \frac{h_{min}(0)}{H_{min}(z)} \tag{24}$$

holds, so that the expression (12) is fulfilled with equality. For a finite degree $q_p$, which should not be chosen to be too low, a good FIR approximation results to the recursive transfer function $A_2(z)$.

Since the frequency response of the transfer function *1-P(z)* can have a slightly undulating nature, the coefficients of the transfer function are advantageously multiplied by a suitable window sequence. Such a window sequence is for example realized by the Bartlett window.

The overall transfer function of the two-stage prefilter, Constituted from the transfer function of the matched filter 20 and the transfer function of the time-reflected and conjugated prediction error filter 30, on permitting an additional delay which is necessary for a causal realization, is as a result

$$F(z) = z^{-q_h} F_1(z) z^{-q_p} F_2(z)$$

$$= z^{-q_h} * H * (\frac{1}{z^*}) * z^{-q_p} * G * (\frac{1}{z^*})$$

$$= z^{-(q_h+q_p)} * H * (\frac{1}{z^*}) * 1 - P * (\frac{1}{z^*}) \tag{25}$$

the required numerical complexity for the design of the two-stage prefilter 40 is markedly smaller in contrast to known processes, since very efficient algorithms exist for the Yule-Walker equations (16), such as, for example, the Levinson algorithm, the Levinson-Durbin (LD) algorithm, or the Trench algorithm. The LD algorithm requires, for example, $2q_p$ memory locations and $q_p^2 + O(q_p)$ calculation operations. Here all predictors with an order smaller than $q_p$ are calculated for the determination of a predictor of order $q_p$.

If the two-stage prefilter 40 shown in Fig. 2 is used, for example in a GSM system, it is additionally advantageous to embody a maximal-phase impulse response in a subsequent reduced-state distortion correction in the negative time direction, used on portions of the received signal. A maximal-phase impulse response can be attained by means of the two-stage prefilter 40, in that the transfer function of the prefilter 40 given by Equation (25) is converted by a simple modification into the equation

$$F(z) = z^{-q_h} * H * \left(\frac{1}{z^*}\right) * (1-P(z)) \tag{26}$$

The two-stage prefilter 40 serves to convert a channel pulse response into its minimal-phase or maximal-phase equivalent; the prefilter, because of the two-stage construction, can be designed with a markedly smaller calculation cost in comparison with the known processes.

By means of the two-stage prefilter, the reduced-state distortion corrector 50 can recover transmitted signals from the received signals with a performance efficiency about equally as good as when the theoretically optimum all-pass filter is used, but the latter, however, is very costly to calculate and has an infinite degree.

**Formula Symbols**

| | |
|---|---|
| $a(k)$ | time-discrete data symbols |
| $\hat{a}(k)$ | determined data symbols |
| $r(k)$ | time-discrete received signal |
| $n(k)$ | time-discrete noise signal |
| $h(k)$ | time-discrete channel pulse response |
| $L$ | length of the time-discrete channel pulse response |
| $q_h$ | degree of the time-discrete channel pulse response |
| $H(z)$ | transfer function of the channel 70 |
| $h_{min}(k)$ | minimal-phase time-discrete channel pulse response |
| $H_{min}(k)$ | minimal-phase transfer function of the channel 70 |
| $A(z)$ | all-pass transfer function |
| $A_1(z)$ | partial transfer function of $A(z)$ |
| $A_2(z)$ | partial transfer function of $A(z)$ |
| $F(z)$ | transfer function of the two-stage prefilter 40 |
| $F_1(z)$ | partial transfer function of the FIR filter stage 20 |
| $F_2(z)$ | partial transfer function of the FIR filter stage 30 |
| $G(z)$ | auxiliary transfer function |
| $P(z)$ | predictor transfer function |
| $p(k)$ | predictor coefficients |
| $q_p$ | predictor degree |
| $O()$ | Landau symbol |

**Claims**

1. Digital receiver (10) for receiving signals transmitted over a distorting channel, including a prefilter (40) for converting the pulse response of the channel into a minimal-phase or maximal-phase signal, and a distortion corrector (50),
   **characterized in that**
   the prefilter (40) has the following features:

   a first FIR filter stage (20) with a first transfer function ($F_1(z)$), and
   connected in cascade thereto, a second FIR filter stage (30) with a second transfer function ($F_2(z)$), wherein the overall transfer function ($F(z)$) constituted from the first and second transfer functions represents an approximation to the ideal all-pass transfer function for the prefilter.

2. Digital receiver according to claim 1,
   **characterized in that**
   the first FIR filter stage (20) is a matched filter,
   that the associated first transfer function is a non-recursive transfer function derivable from the channel pulse response, that the second FIR filter stage (30) is a conjugate complex and time-reflected prediction error filter, and that the associated second transfer function is a predetermined transfer function of the form $(1-P^*(1/z^*))$, where the expression $P(z)$ is the predictor of the prediction error filter.

**3.** Digital receiver according to claim 2,
**characterized in that**
the coefficients of the prediction error filter (30) are determined by the solution of the Yule-Walker equation system, the coefficient matrix of which is a Toeplitz matrix.

**4.** Digital receiver according to claim 3,
**characterized in that** the coefficients of the prediction error filter (30) are weighted with a predetermined window sequence, in particular the Bartlett window function.

**5.** Digital receiver according to claim 3 or 4,
**characterized in that** the Levinson algorithm can be used for solving the Yule-Walker equations.

**6.** Digital receiver according to claim 3 or 4,
**characterized in that** the Levinson-Durbin algorithm can be used for solving the Yule-Walker equations.

**7.** Digital receiver according to one of claims 1-6,
**characterized in that** the distortion corrector (50) carries out a reduced-state trellis-based channel distortion correction.

**8.** Prefilter (40) for use in a digital receiver (10), the receiver including the prefilter (40) for converting the pulse response of the channel into a minimal-phase or maximal phase signal, and a distortion corrector, the prefilter being **characterized by**
a first FIR filter stage (20) with a first transfer function ($F_1(z)$) and
connected in cascade thereto, a second FIR filter state (30) with a second transfer function ($F_2(z)$), wherein the overall transfer function ($F(z)$) constituted from the first and second transfer functions represents an approximation to the ideal all-pass transfer function for the prefilter (40).

**9.** Prefilter according to claim 8,
**characterized in that**
the first FIR filter stage (20) is a matched filter,
that the associated first transfer function is a non-recursive transfer function derivable from the channel pulse response, that the second FIR filter stage (30) is a conjugate complex and time-reflected prediction error filter, and that the associated second transfer function is a predetermined transfer function of the form ($1-P^*(1/z^*)$), where the expression $P(z)$ is the predictor of the prediction error filter.

**10.** Prefilter according to claim 9,
**characterized in that**
the coefficients of the prediction error filter (30) are determined by the solution of the Yule-Walker equation system, the coefficient matrix of which is the Toeplitz matrix.

**11.** Prefilter according to claim 10,
**characterized in that** the coefficients of the prediction error filter (30) are weighted with a predetermined window sequence, in particular the Bartlett window function.

**12.** Prefilter according to claim 10 or 11,
**characterized in that** the Levinson algorithm can be used for solving the Yule-Walker equations.

**13.** Prefilter according to claim 10 or 11,
**characterized in that** the Levinson-Durbin algorithm can be used for solving the Yule-Walker equations.

**14.** Process for receiving signals transmitted over a distorting channel in a digital receiver (10) having a prefilter (40) and a distortion corrector (50) according to one of claims 1-7, wherein the prefilter is designed by the following process steps:

  (a) determination of the pulse response of the channel (70);
  (b) determination of the coefficients of a first FIR filter stage (20) of the prefilter (40) from the channel pulse response;
  (c) calculation of the coefficients of a second, predetermined FIR filter stage (30) of the prefilter, such that the overall transfer function constituted by the first and second FIR filter stages represents an approximation to the ideal all-pass transfer function for the prefilter (40), so that the channel pulse response can be converted into a corresponding minimal-phase or maximal-phase system.

**15.** Process according to claim 14,
**characterized in that**
the first filter stage (20) is a matched filter, the coefficients of which are derived by conjugation and conversion of the sequence of the coefficients of the channel pulse response, and that the second filter stage (30) is a conjugate complex and time-reflected prediction error filter, the coefficients of which are determined by solving the Yule-Walker equations, the coefficient matrix of which is a Toeplitz matrix.

**16.** Process according to claim 15,
**characterized in that**
the coefficients of the prediction error filter (30) are weighted with a predetermined window sequence, in particular the Bartlett window function.

**17.** Process according to claim 15 or 16,
**characterized in that** the Levinson algorithm is used for solving the Yule-Walker equations.

**18.** Process according to claim 15 or 16,
**characterized in that** the Levinson-Durbin algorithm is used for solving the Yule-Walker equations.

**Patentansprüche**

**1.** Digitaler Empfänger (10) zum Empfangen von über einen verzerrenden Kanal übertragenen Signalen, mit einem Vorfilter (40) zum Umwandeln der Impulsantwort des Kanals in ein Minimalphasen- oder Maximalphasensignal und einem Verzerrungskorrigierer (50),
**dadurch gekennzeichnet, daß**
das Vorfilter (40) die folgenden Merkmale aufweist:

eine erste FIR-Filterstufe (20) mit einer ersten Übertragungsfunktion ($F_1(z)$) und
in Kaskadenschaltung damit eine zweite FIR-Filterstufe (30) mit einer zweiten Übertragungsfunktion ($F_2(z)$), wobei die durch die erste und die zweite Übertragungsfunktion gebildete Gesamt-Übertragungsfunktion ($F(z)$) eine Approximation der idealen Allpaß-Übertragungsfunktion für das Vorfilter repräsentiert.

**2.** Digitaler Empfänger nach Anspruch 1, **dadurch gekennzeichnet, daß**
die erste FIR-Filterstufe (20) ein abgestimmtes Filter ist,
die zugeordnete erste Übertragungsfunktion eine aus der Kanalimpulsantwort ableitbare nichtrekursive Übertragungsfunktion ist, die zweite FIR-Filterstufe (30) ein konjugiert-komplexes und zeitreflektiertes Prädiktionsfehlerfilter ist und die zugeordnete zweite Übertragungsfunktion eine vorbestimmte Übertragungsfunktion der Form (1-P* (1/z*)) ist, wobei der Ausdruck P(z) der Prädiktor des Prädiktionsfehlerfilters ist.

**3.** Digitaler Empfänger nach Anspruch 2, **dadurch gekennzeichnet, daß**
die Koeffizienten des Prädiktionsfehlerfilters (30) durch die Lösung des Yule-Walker-Gleichungssystems bestimmt werden, dessen Koeffizientenmatrix eine Töplitzmatrix ist.

**4.** Digitaler Empfänger nach Anspruch 3, **dadurch gekennzeichnet, daß** die Koeffizienten des Prädiktionsfehlerfilters (30) mit einer vorbestimmten Fenstersequenz, insbesondere der Bartlett-Fensterfunktion, gewichtet werden.

**5.** Digitaler Empfänger nach Anspruch 3 oder 4, **dadurch gekennzeichnet, daß** der Levinson-Algorithmus zur Lösung der Yule-Walker-Gleichungen verwendet werden kann.

**6.** Digitaler Empfänger nach Anspruch 3 oder 4, **dadurch gekennzeichnet, daß** der Levinson-Durbin-Algorithmus zur Lösung der Yule-Walker-Gleichungen verwendet werden kann.

**7.** Digitaler Empfänger nach einem der Ansprüche 1-6, **dadurch gekennzeichnet, daß** der Verzerrungskorrigierer (50) eine zustandsreduzierte Kanalverzerrungskorrektur auf Trellis-Basis ausführt.

**8.** Vorfilter (40) zur Verwendung in einem digitalen Empfänger (10), wobei der Empfänger das Vorfilter (40) zur Umwandlung der Impulsantwort des Kanals in ein Minimalphasen- oder ein Maximalphasensignal und einen Verzerrungskorrigierer enthält, wobei das Vorfilter durch folgendes gekennzeichnet ist:

eine erste FIR-Filterstufe (20) mit einer ersten Übertragungsfunktion ($F_1(z)$) und
in Kaskadenschaltung damit eine zweite FIR-Filterstufe (30) mit einer zweiten Übertragungsfunktion ($F_2(z)$), wobei die durch die erste und die zweite Übertragungsfunktion gebildete Gesamt-Übertragungsfunktion ($F(z)$) eine Approximation der idealen Allpaß-Übertragungsfunktion für das Vorfilter (40) repräsentiert.

**9.** Vorfilter nach Anspruch 8, **dadurch gekennzeichnet, daß**
die erste FIR-Filterstufe (20) ein abgestimmtes Filter ist,
die zugeordnete erste Übertragungsfunktion eine aus der Kanalimpulsantwort ableitbare nichtrekursive Übertragungsfunktion ist, die zweite FIR-Filterstufe (30) ein konjugiert-komplexes und zeitreflektiertes Prädiktionsfehlerfilter ist und
die zugeordnete zweite Übertragungsfunktion eine vorbestimmte Übertragungsfunktion der Form (1-P*(1/z*)) ist, wobei der Ausdruck P(z) der Prädiktor des Prädiktionsfehlerfilters ist.

**10.** Vorfilter nach Anspruch 9, **dadurch gekennzeichnet, daß**
die Koeffizienten des Prädiktionsfehlerfilters (30) durch die Lösung des Yule-Walker-Gleichungssystems bestimmt werden, dessen Koeffizientenmatrix die Töplitzmatrix ist.

**11.** Vorfilter nach Anspruch 10, **dadurch gekennzeichnet, daß** die Koeffizienten des Prädiktionsfehlerfilters (30) mit einer vorbestimmten Fenstersequenz, insbesondere der Bartlett-Fensterfunktion, gewichtet werden.

**12.** Vorfilter nach Anspruch 10 oder 11, **dadurch gekennzeichnet, daß** der Levinson-Algorithmus zur Lösung der Yule-Walker-Gleichungen verwendet werden kann.

**13.** Vorfilter nach Anspruch 10 oder 11, **dadurch gekennzeichnet, daß** der Levinson-Durbin-Algorithmus zur Lösung der Yule-Walker-Gleichungen verwendet werden kann.

**14.** Prozeß zum Empfangen von über einen verzerrenden Kanal übertragenen Signalen in einem digitalen Empfänger (10) mit einem Vorfilter (40) und einem Verzerrungskorrigierer (50) nach einem der Ansprüche 1-7, wobei das Vorfilter durch die folgenden Verfahrensschritte entworfen wird:

(a) Bestimmen der Impulsantwort des Kanals (70);
(b) Bestimmen der Koeffizienten einer ersten FIR-Filterstufe (20) des Vorfilters (40) aus der Kanalimpulsantwort;
(c) Berechnen der Koeffizienten einer zweiten vorbestimmten FIR-Filterstufe (30) des Vorfilters (40) dergestalt, daß die durch die erste und die zweite FIR-Filterstufe gebildete Gesamt-Übertragungsfunktion eine Approximation der idealen Allpaß-Übertragungsfunktion des Vorfilters (40) repräsentiert, so daß die Kanalimpulsantwort in ein entsprechendes Minimalphasen- oder Maximalphasensystem umgewandelt werden kann.

**15.** Prozeß nach Anspruch 14, **dadurch gekennzeichnet, daß**
die erste Filterstufe (20) ein abgestimmtes Filter ist, dessen Koeffizienten durch Konjugation und Umwandlung der Sequenz der Koeffizienten der Kanalimpulsantwort abgeleitet werden, und die zweite Filterstufe (30) ein konjugiert-komplexes und zeitreflektiertes Prädiktionsfehlerfilter ist, dessen Koeffizienten durch Lösen der Yule-Walker-Gleichungen bestimmt werden, deren Koeffizientenmatrix eine Töplitzmatrix ist.

**16.** Prozeß nach Anspruch 15, **dadurch gekennzeichnet, daß**
die Koeffizienten des Prädiktionsfehlerfilters (30) mit einer vorbestimmten Fenstersequenz, insbesondere der Bartlett-Fensterfunktion, gewichtet werden.

**17.** Prozeß nach Anspruch 15 oder 16, **dadurch gekennzeichnet, daß** der Levinson-Algorithmus zur Lösung der Yule-Walker-Gleichungen verwendet wird.

**18.** Prozeß nach Anspruch 15 oder 16, **dadurch gekennzeichnet, daß** der Levinson-Durbin-Algorithmus zur Lösung der Yule-Walker-Gleichungen verwendet wird.

**Revendications**

1. Récepteur numérique (10) pour recevoir des signaux transmis sur un canal à distorsion, comportant un préfiltre (40) pour convertir la réponse impulsionnelle du canal en un signal de phase minimale ou de phase maximale, et un correcteur de distorsion (50),
   **caractérisé en ce que**
   le préfiltre (40) comporte les caractéristiques suivantes :

   un premier étage de filtre FIR (20) à première fonction de transfert ($F_1(z)$), et
   connecté en cascade à celui-ci, un deuxième étage de filtre FIR (30) à deuxième fonction de transfert ($F_2(z)$), dans lequel la fonction de transfert globale ($F(z)$) constituée à partir des première et deuxième fonctions de transfert représente une approximation de la fonction de transfert passe-tout idéale du préfiltre.

2. Récepteur numérique selon la revendication 1,
   **caractérisé en ce que**
   le premier étage de filtre FIR (20) est un filtre adapté,
   la première fonction de transfert associée est une fonction de transfert non récurrente pouvant être dérivée de la réponse impulsionnelle du canal, le deuxième étage de filtre FIR (30) est un filtre d'erreur de prédiction réfléchi dans le temps et complexe conjugué, et
   la deuxième fonction de transfert associée est une fonction de transfert prédéterminée de la forme (1-P*(1/z*)), où l'expression P(z) est le prédicteur du filtre d'erreur de prédiction.

3. Récepteur numérique selon la revendication 2,
   **caractérisé en ce que**
   les coefficients du filtre d'erreur de prédiction (30) sont déterminés par la solution du système d'équations de Yule-Walker, dont la matrice de coefficients est une matrice de Toeplitz.

4. Récepteur numérique selon la revendication 3,
   **caractérisé en ce que** les coefficients du filtre d'erreur de prédiction (30) sont pondérés avec une séquence de fenêtre prédéterminée, en particulier la fonction de fenêtre de Bartlett.

5. Récepteur numérique selon la revendication 3 ou 4,
   **caractérisé en ce que** l'algorithme de Levinson peut être utilisé pour résoudre les équations de Yule-Walker.

6. Récepteur numérique selon la revendication 3 ou 4,
   **caractérisé en ce que** l'algorithme de Levinson-Durbin peut être utilisé pour résoudre les équations de Yule-Walker.

7. Récepteur numérique selon l'une quelconque des revendications 1 à 6,
   **caractérisé en ce que** le correcteur de distorsion (50) effectue une correction de distorsion de canal basée sur un treillis d'état réduit.

8. Préfiltre (40) destiné à être utilisé dans un récepteur numérique (10), le récepteur comportant le préfiltre (40) pour convertir la réponse impulsionnelle du canal en un signal de phase minimale ou de phase maximale, et un correcteur de distorsion, le préfiltre étant **caractérisé par**
   un premier étage de filtre FIR (20) à première fonction de transfert ($F_1(z)$), et
   connecté en cascade à celui-ci, un deuxième étage de filtre FIR (30) à deuxième fonction de transfert ($F_2(z)$), dans lequel la fonction de transfert globale ($F(z)$) constituée à partir des première et deuxième fonctions de transfert représente une approximation de la fonction de transfert passe-tout idéale du préfiltre (40).

9. Préfiltre selon la revendication 8,
   **caractérisé en ce que**
   le premier étage de filtre FIR (20) est un filtre adapté,
   la première fonction de transfert associée est une fonction de transfert non récurrente pouvant être dérivée de la réponse impulsionnelle du canal, le deuxième étage de filtre FIR (30) est un filtre d'erreur de prédiction réfléchi dans le temps et complexe conjugué, et
   la deuxième fonction de transfert associée est une fonction de transfert prédéterminée de la forme (1-P*(1/z*)), où l'expression P(z) est le prédicteur du filtre d'erreur de prédiction.

**10.** Préfiltre selon la revendication 9,
**caractérisé en ce que**
les coefficients du filtre d'erreur de prédiction (30) sont déterminés par la solution du système d'équations de Yule-Walker, dont la matrice de coefficients est une matrice de Toeplitz.

**11.** Préfiltre selon la revendication 10,
**caractérisé en ce que** les coefficients du filtre d'erreur de prédiction (30) sont pondérés avec une séquence de fenêtre prédéterminée, en particulier la fonction de fenêtre de Bartlett.

**12.** Préfiltre selon la revendication 10 ou 11,
**caractérisé en ce que** l'algorithme de Levinson peut être utilisé pour résoudre les équations de Yule-Walker.

**13.** Préfiltre selon la revendication 10 ou 11,
**caractérisé en ce que** l'algorithme de Levinson-Durbin peut être utilisé pour résoudre les équations de Yule-Walker.

**14.** Processus de réception de signaux transmis sur un canal à distorsion dans un récepteur numérique (10) ayant un préfiltre (40) et un correcteur de distorsion (50) conformément à l'une des revendications 1 à 7, dans lequel le préfiltre est conçu par les étapes de processus suivantes :

(a) détermination de la réponse impulsionnelle du canal (70) ;
(b) détermination des coefficients d'un premier étage de filtre FIR (20) du préfiltre (40) à partir de la réponse impulsionnelle de canal ;
(c) calcul des coefficients d'un deuxième étage de filtre FIR prédéterminé (30) du préfiltre, de telle sorte que la fonction de transfert globale constituée par les premier et deuxième étages de filtre FIR représente une approximation de la fonction de transfert passe-tout idéale du préfiltre (40), de telle sorte que la réponse impulsionnelle de canal puisse être convertie en un système à phase minimale ou à phase maximale correspondant.

**15.** Processus selon la revendication 14,
**caractérisé en ce que**
le premier étage de filtre (20) est un filtre adapté dont les coefficients sont dérivés par conjugaison et conversion de la séquence des coefficients de la réponse impulsionnelle du canal, et le deuxième étage de filtre (30) est un filtre d'erreur de prédiction réfléchi dans le temps et complexe conjugué, dont les coefficients sont déterminés en résolvant les équations de Yule-Walker, dont la matrice de coefficients est une matrice de Toeplitz.

**16.** Processus selon la revendication 15,
**caractérisé en ce que**
les coefficients du filtre d'erreur de prédiction (30) sont pondérés avec une séquence de fenêtre prédéterminée, en particulier la fonction de fenêtre de Bartlett.

**17.** Processus selon la revendication 15 ou 16,
**caractérisé en ce que** l'algorithme de Levinson est utilisé pour résoudre les équations de Yule-Walker.

**18.** Processus selon la revendication 15 ou 16,
**caractérisé en ce que** l'algorithme de Levinson-Durbin est utilisé pour résoudre les équations de Yule-Walker.

FIG. 1

FIG. 2

EP 1 032 170 B1